(19) Europäisches Patentamt / European Patent Office / Office européen des brevets

(11) **EP 1 955 092 B1**

(12) **EUROPEAN PATENT SPECIFICATION**

(45) Date of publication and mention
of the grant of the patent:
**29.07.2015 Bulletin 2015/31**

(21) Application number: **06818340.9**

(22) Date of filing: **02.11.2006**

(51) Int Cl.:
**G01V 1/00** (2006.01)

(86) International application number:
**PCT/EP2006/010520**

(87) International publication number:
**WO 2007/051621 (10.05.2007 Gazette 2007/19)**

(54) **A METHOD FOR DETECTING OF GEOTECTONIC SIGNALS TRIGGERED BY A GEOTECTONIC EVENT**

METHODE ZUR ENTDECKUNG VON GEOTEKTONISCHEN SIGNALEN WELCHE VON EINEM GEOTEKTONISCHEN EREIGNIS AUSGELÖST WURDEN

DETECTION DE SIGNAUX GEOTECTONIQUES DECLENCHES PAR UN EPISODE GEOTECTONIQUE

(84) Designated Contracting States:
**AT BE BG CH CY CZ DE DK EE ES FI FR GB GR HU IE IS IT LI LT LU LV MC NL PL PT RO SE SI SK TR**

(30) Priority: **04.11.2005 DE 102005053038**

(43) Date of publication of application:
**13.08.2008 Bulletin 2008/33**

(73) Proprietor: **Deutsches Zentrum für Luft- und Raumfahrt e.V.**
**51147 Köln (DE)**

(72) Inventors:
• **BITTNER, Michael**
86929 Untermühlhausen (DE)
• **HÖPPNER, Kathrin**
82319 Starnberg-Perchting (DE)
• **WÜST, Sabine**
90542 Eckental (DE)

(74) Representative: **Von Kreisler Selting Werner - Partnerschaft**
**von Patentanwälten und Rechtsanwälten mbB**
**Deichmannhaus am Dom**
**Bahnhofsvorplatz 1**
**50667 Köln (DE)**

(56) References cited:
• **KOZAK L.V., DZUBENKO M.I., IVCHENKO V.M.: "Temperature and thermosphere dynamics behaviour analysis over earthquake epicentres from satellite measurements" PHYSICS AND CHEMISTRY OF THE EARTH, vol. 29, 9 April 2004 (2004-04-09), pages 507-515, XP009077730**
• **ABURDZHANIYA G.D.: "Self-Organization of Acoustic-Gravity Vortices in the Ionosphere before Earthquakes" PLASMA PHYSICS REPORTS, vol. 22, no. 10, October 1996 (1996-10), pages 864-868, XP009077653 Russia**
• **FISHKOVA L.M., GOKHBERG M.B., PILIPENKO V.A.: "Relationship between night airglow and seismic activity" ANNALES GEOPHYSICAE, vol. 3, no. 6, 1985, pages 689-694, XP001249008**
• **SHALIMOV S., GOKHBERG M.: "LITHOSPHERE-IONOSPHERE COUPLING MECHANISM AND ITS APPLICATION TO THE EARTHQUAKE IN IRAN ON JUNE 20, 1990. A REVIEW OF IONOSPHERIC MEASUREMENTS AND BASIC ASSUMPTIONS" PHYSICS OF THE EARTH AND PLANETARY INTERIORS, vol. 105, 31 January 1998 (1998-01-31), pages 211-218, XP009077632**
• **BANKOV L.G., VASSILEVA A.K.: PROCEEDINGS OF THE INTERNATIONAL CONFERENCE ON RECENT ADVANCES IN SPACE TECHNOLOGIES, IEEE CAT. N0. 03EX743, 20 November 2003 (2003-11-20), pages 514-518, XP009077626 PISCATAWAY, NJ, USA**

## Description

Field of the Invention

The invention is directed to a method for detecting geotectonic signals triggered by a geotectonic event, utilizing an infrasonic wave accompanying the geotectonic event and being generated at the ground, and further utilizing temperature fluctuations causing a modulation of an airglow, said temperature fluctuations being caused by said infrasonic wave whose amplitude increases with the altitude due to the exponentially decreasing air pressure.

Background of the Invention

On Christmas 2004, a tsunami released by a seaquake caused a natural disaster along the shores of littoral states of the Indian Ocean, taking the lives of almost 250,000 humans. This event stirred reflections around the world to install and develop efficient alarm systems that assist in an early detection of such events and thus allow the population to be warned in time.

Description of State of the Art

Instruments previously used to record geotectonic signals include:

- seismographs for recording seismic signals,

- sub-aqueous pressure sensors for recording minute seismic signals and irregularities of pressure,

- GPS supported measuring buoys for observing the sea level in the event of a seaquake,

- microbarographs for measuring infrasonic waves developed and employed to control the nuclear weapons non-proliferation treaty of 1996.

However, the seismic systems used hitherto can not discriminate whether the ground shifts in the horizontal or the vertical direction. However, tsunamis, for example, exclusively form when the ground is lifted vertically.
The previously employed pressure sensors are merely configured for the detection of earthquakes and tsunamis. Existing instruments, such as the GPS supported measuring buoys, require intensive maintenance.
Among other things Kozak L. V., Dzubenko M. I., Ivchenko V. M.: "Temperature and thermosphere dynamics behaviors analysis over earthquake epicenters from satellite measurements", PHYSICS AND CHEMISTRY OF THE EARTH, vol. 29, 9 April 2004 (2004-04-09), pages 507-515, XP009077730, report temperature variations in an altitude range from 80 to 300km. These variations are attributed to *gravity* waves which are generated by an earthquake.
The paper of Aburdzhaniya G. D.: "Self-Organization of Acoustic-Gravity wave Vortices in the Ionosphere before Earthquakes", PLASMA PHYSICS REPORTS, vol. 22, no. 10, Octobre 1996 (1996-10), pages 864-868, XP0090077653, focuses on observations of anomalies in the ionosphere and in the atmospheric airglow due to earthquakes. Reference is made to several publications which are well-known to the inventors.

Summary of the Invention

It is an object of the present invention to provide a highly efficient method for detecting geotectonic events, wherein the direction of a shift is detected utilizing an infrasonic wave accompanying a geotectonic event.
According to claim 1, the method of the present invention achieves this object by detecting a modulation of an airglow from the ground by means of infrared spectrometer and by measuring the temperature of the mesopause with a high temporal resolution.
The present method takes advantages of the fact that, as the altitude increases, the amplitude of an infrasonic wave generated at the ground becomes ever higher due to the exponentially decreasing air pressure. The fluctuations in temperature caused by such a wave effect a modulation of the so-called "airglow" at an altitude of 87 km. The so-called airglow is an emission of rotational-vibrational bands of the excited hydroxyl molecule (OH*) and oxygen molecule ($O_2$*) from the altitude range of approximately 85-95 km in the infrared and visible wavelength range.
According to the Invention, such an airglow is measured at night from the ground with a high temporal resolution in the order of 1 - 3 minutes using infrared spectrometers. The information thus obtained is of essential importance, for example with respect to the development of tsunamis and thus to an early warning.
Yet, the present method is not restricted to the detection of seaquakes and their relevance for the development of a tsunami. Although geotectonic signals are caused in particular by vertically oriented earthquakes, such as seaquakes, geotectonic signals may also be generated by volcanic activity, explosions, storms, meteorites entering the atmosphere, or wind power plants. The present method is thus generally suited for operative infrasonic detection and thus for recording geotectonic signals within the framework of an early warning system.

In an advantageous development of the invention, a network of a number of simultaneously operated infrared spectrometers may be set up, the infrared spectrometers being installed in sensitive regions, thereby allowing to locate the respective geotectonic event.

Description of the drawings

In the Figures:

Fig. 1    is a schematic illustration of a sound wave in a tube;

Fig. 2    is another schematic illustration of an infrasonic measuring station comprising a microbarograph sunk into the ground;

Fig. 3    is a picture from aboard a satellite showing a layer of excited hydroxyl molecules (OH*) at an altitude of about 87 km, and

Fig. 4    shows the temporal development of the temperature in the region of the mesopause at an altitude of about 87 km, measured with an infrared spectrometer.

Detailed Description of preferred Embodiments

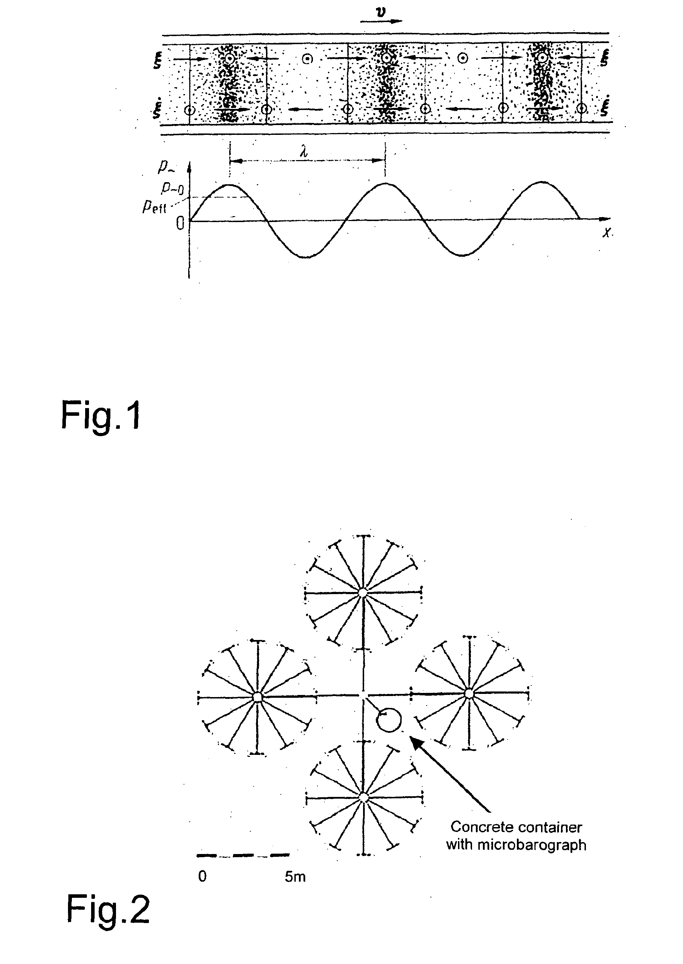

Since sound waves are mechanical density waves, compression portions propagate periodically in longitudinal direction, as can be seen in the schematic illustration in Fig. 1. At frequencies below 15-20 Hz, infrasound is not perceptible by human hearing that is in the range between 16Hz to 20 kHz. The oscillation period is between about 5 minutes and 0.1 seconds, the wavelength is between about 1000 km and 30 m. Since such waves are absorbed only very weakly in the atmosphere, they can propagate over large distances.

In the early 60's, nuclear weapon tests were monitored using infrasound. As the number of such tests has decreased, especially due to the ban on nuclear weapons tests above ground, the public infrasonic research has subsided. However, one may assume that infrasonic research has been carried on at least in the military domain since there is a large variety of possible military applications, such as the use of infrasound as a weapon in the form of an infrasonic gun or as a means to locate engines, turbines and other rotating machines.

Besides oscillating bridges or skyscrapers, sounds of infrasound may also be storms, the surf and the tides of the sea, meteors entering the atmosphere, or volcanic eruptions. Wind power plants also produce infrasound. It is also possible, by frequency analysis, to conclude on the gas content of the rising magma from the infrasound coming from a volcano.

Infrasound may be measured directly with special microphones whose size, however, is a multiple of that of conventional microphones. The core piece is a highly sensitive microbarograph sunk into the ground and communicated with the atmosphere through a pipe system arranged in a star shape on the ground, as is schematically illustrated in Fig. 2. This two-dimensional arrangement reduces disturbing pressure variations as they are caused by turbulences of the airflow, e.g., by wind. Presently, a globally distributed infrasonic measuring network is in the making which will eventually comprise 60 stations.

Sound waves are longitudinal with periodically continuing density changes in a medium. Uplifts and drops of the land or sea level, for example, act like the membrane of a loudspeaker moving the molecules above this surface back and forth by a distance $\xi$, in time with the cycle of this vibration. The elasticity of the medium acts as the returning force; the disturbance propagates sinuously, as can be seen in Fig. 1. Since the air pressure decreases as the altitude increases, the amplitude of a sound wave increases with the altitude. Thus, a signal is clearly discernible at high altitudes in the atmosphere.

In the following, a rough estimation of the temperature change is made that is to be expected from a temperature change at higher altitudes in the atmosphere accompanying an infrasonic wave produced by a sea quake. It can be pointed out that the pressure change accompanying a sound wave is proportional to the gradient $\xi$ in the propagation direction. This is given by:

$$\Delta p(x,t) = \frac{1}{\kappa} k \xi_0 \cos(\omega t - kx)$$

Here, x is the propagation direction of the wave, $\omega = \dfrac{2\pi}{t}$ is the angular frequency, $k = \dfrac{2\pi}{\lambda}$ is the wave number, $\lambda$ is the wavelength, k is the compressibility of the medium, and $\xi_0$ is a maximum deflection of the molecules.

Thus, the maximum pressure change is given as:

$$\Delta p_{max} = \frac{1}{\kappa} k \xi_0$$

This expression is generally applicable to all media if the corresponding compressibility k is used. Since pressure alternations in sound waves occur quickly depending on the thermal conductivity of air, the following is based on adiabatic processes. For such processes, the compressibility is given as:

$$k = \frac{1}{\gamma p}, \text{ where } \gamma = \frac{c_p}{c_v}$$

$\gamma$ is the ratio of the thermal capacities at constant pressure and volume and amounts to approximately 1.4 for air at a temperature of 300 Kelvin.

During the quake before Sumatra, within seconds the ground sank by ten meters over a distance of about 1,000 kilometers; the water level was lifted by about half a meter. For a first estimate, it is thus assumed that a seaquake entailed a change in the sea level of 0.5 meters ($\xi_0$). If the length of the infrasonic wave is given as $\lambda$ = 1,000 km and the air pressure at the sea level is assumed as p = 1,013 hPa, then

$$\Delta p_{max} = 1{,}4 \times 1013 \frac{2\pi}{10^6} 0{,}5 \approx 4{,}46 \times 10^{-1} \, hPa$$

is obtained for the pressure change to be expected at the surface.

It is assumed that these conditions apply to an ideal gas. Thus, the following relation between pressure and temperature holds true:

$$T P^{\frac{1}{\gamma}-1} = const.$$

For a temperature of 300 K and a pressure of 1,013 hPa, a value of 41.53 is obtained for the constant. Thus, it can be estimated that the temperature change accompanying such an event is

$$\Delta T = \frac{41{,}53}{(1013 + \Delta p)^{\frac{1}{\gamma}-1}} - 300 \approx 9{,}1 \times 10^{-3} \, K$$

In this grossly simplifying and rough estimate, it is assumed that the infrasonic wave propagates vertically in the atmosphere with almost no loss (which naturally is not true). Up to an altitude of about 90 kilometers, the air pressure decreases by a factor of $10^5$ with respect to the surface level. This means that the above mentioned pressure change, related to one infrasonic wave at most, effectively, i.e. relative to sea level, is

$$\Delta p_{max/90km} \approx 446 \, hPa$$

Thus, an effective temperature change of $\Delta T \approx 33$ K is obtained.

As already mentioned above, the estimate made here starts from grossly simplified conditions. In detail, the processes are a lot more complicated; damping processes, wave conduction phenomena etc. have not been considered here. Nevertheless, this estimate shows that infrasonic waves in the region of the upper mesosphere may presumably cause temperature variability in the order of several 10 K. Here, the periodicity should be within a range of up to several minutes.

Detecting infrasound-related signatures in the temperature of the upper mesosphere for an early detection of natural risks necessitates an operational, quality-assured and continuous monitoring thereof by means of robust infrared spectrometers. This takes advantage of the fact that a layer of excited hydroxyl molecules (OH*) exists in the altitude range of the mesopause. This layer has a vertical extension of approximately 7 kilometers; its center is at about 87 kilometers. Excited OH* molecules emit radiation in the near infrared in the range from 1,2 to 1.6 micrometers that correspond to different oscillation and rotation transitions of the molecule and can be measured by the instrument at night ("airglow").

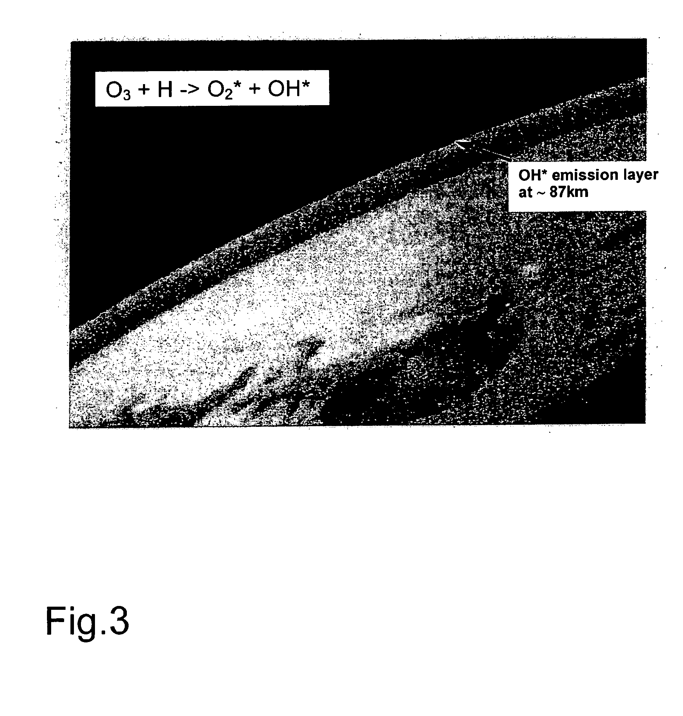

Fig. 3 shows a photo of this layer taken by the US satel-lite Clementine. The emissions from the rotation-vibration transitions of the OH* (3.1) bands can be detected by the above mentioned ground-bound infrared spectrometers. This method is proven, robust and supplies a measured temperature value every one to three minutes unless the range of vision is not entirely covered by clouds. Thus, the system is basically adapted to detect vibrations in the periodic time range of infrasonic waves.

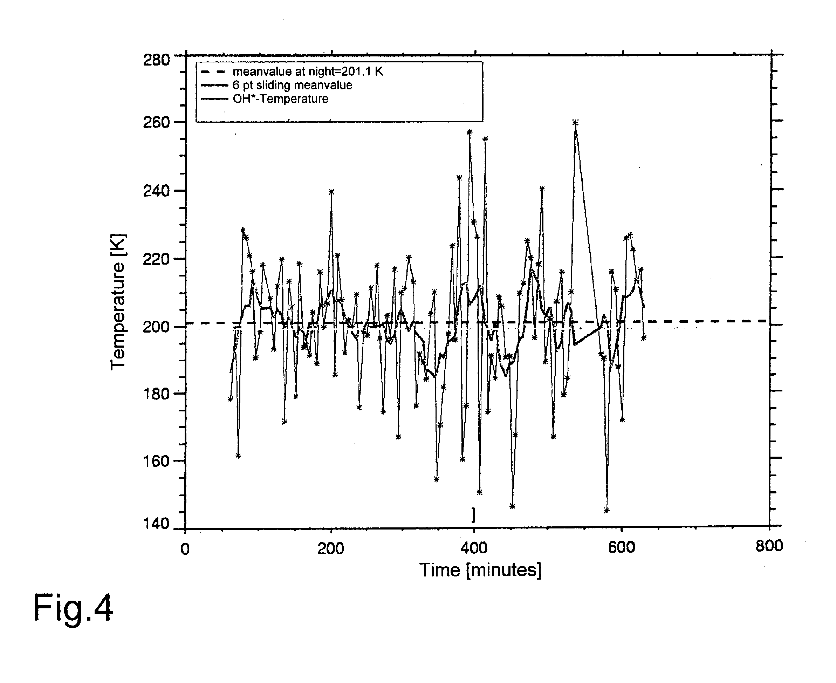

An example of a temperature time sequence recorded during one night is illustrated in Fig. 4. The temporal resolution is 4.5 minutes. Longer-scale variations in the course of temperature can be observed (see the thicker curve in Fig. 4) that presumably are due to atmospheric gravity waves and tides. These longer-scaled variations are superposed by short-scaled temperature variations (see the curve marked by * in Fig. 4) having periodic times of only a few minutes. It should further be noted that the amplitude of this short-scaled variations can vary heavily with respect to time. These signatures could at least in part be caused by infrasound. The measures can be evaluated practically in near real-time; infrasonic signatures can be detected by high-performance spectral analysis methods.

Fig. 4 represents the temporal development of temperature in the region of the mesopause (about 87 km) measured with an infrared spectrometer. The temporal resolution of the measures is 4.5 minutes. The thicker curve represents a sliding mean value. Particular attention should be given to the increase in the amplitude of the short-scaled temperature variations around the 400th minute that reaches 40 to 80 K.

## Claims

1. A method for detecting a geotectonic event, such as seaquakes, especially tsunamis, wherein an infrasonic wave triggered by such a geotectonic event and having an amplitude increasing due to the air pressure decreasing exponentially as the altitude increases, causes temperature fluctuations resulting in an airglow modulation and thereby in an emission of OH* rotation-vibration bands in the infrared wavelength range in the upper mesosphere, **characterized in that** the airglow modulation, by means of an infrared spectrometer, is measured at night from the ground with a temporal resolution for detecting OH* rotation-vibration in the periodic time range of infrasonic waves, whereby such geotectonic events can be detected early on.

2. The method of claim 1, **characterized in that**, for the detection of a geostationary event, a number of simultaneously operated infrared spectrometers is provided in regions sensitive to geotectonic events.

## Patentansprüche

1. Verfahren zum Detektieren eines geotektonischen Ereignisses, wie z.B. von Seebeben, insbesondere Tsunamis, bei dem eine Infrarotwelle, die von einem derartigen geotektonischen Ereignis ausgelöst wird und eine Amplitude hat, welche sich aufgrund des mit zunehmender Höhe exponentiell abnehmenden Luftdrucks erhöht, Temperaturschwankungen verursacht, die in einer Modulation des Nachthimmelsleuchtens und dadurch in der oberen Mesosphäre in einer Emission von OH*-Dreh-vibrationsbändern im Infrarotwellenlängenbereich resultieren, **dadurch gekennzeichnet, dass** zum Detektieren von OH*-Drehvibration im periodischen Zeitbereich von Ultraschallwellen die Modulation des Nachthimmelsleuchtens bei Nacht mittels eines Infrarotspektrometers vom Boden aus mit einer zeitlichen Auflösung gemessen wird, wodurch derartige geotektonische Ereignisse früh detektiert werden können.

2. Verfahren nach Anspruch 1, **dadurch gekennzeichnet, dass** in Gegen-den, die anfällig für geotektonische Ereignisse sind, zur Detektion eines geostationären Ereignisses eine Anzahl simultan betriebener Infrarotspektrometer bereitgestellt wird.

**Revendications**

1. Procédé de détection d'un épisode géotectonique, tel que des séismes marins, notamment des tsunamis, selon lequel une onde infra-sonique déclenchée par un tel épisode géotectonique et ayant une amplitude croissante en raison de la pression d'air décroissant exponentiellement dans la mesure où l'altitude augmente, cause des fluctuations de température qui résultent en une modulation de la luminescence atmosphérique et, par cela, d'une émission de bandes de rotation-vibration OH* dans la gamme des longueurs d'onde infra-rouges dans la mésosphère supérieure, **caractérisé en ce que** la modulation de la luminescence atmosphérique est mesurée, à l'aide d'un spectromètre infra-rouge, la nuit à partir du sol avec une résolution temporelle pour détecter de la rotation-vibration OH$^*$ dans le laps de temps périodique d'ondes infra-rouges, par lequel procédé de tels épisodes géotectoniques peuvent être détectés tôt.

2. Procédé selon la revendication 1, **caractérisé en ce que**, pour la détection d'un épisode géotectonique, un nombre de spectromètres infra-rouge mis en fonctionnement simultanément, est disposé dans des régions sensibles aux épisodes géotectoniques.

# Fig.1

Concrete container
with microbarograph

0          5m

# Fig.2

$$O_3 + H \rightarrow O_2^* + OH^*$$

OH* emission layer
at ~ 87km

Fig.3

Fig.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KOZAK L. V. ; DZUBENKO M. I. ; IVCHENKO V. M.** Temperature and thermosphere dynamics behaviors analysis over earthquake epicenters from satellite measurements. *PHYSICS AND CHEMISTRY OF THE EARTH,* 09 April 2004, vol. 29, 507-515

- **ABURDZHANIYA G. D.** Self-Organization of Acoustic-Gravity wave Vortices in the Ionosphere before Earthquakes. *PLASMA PHYSICS REPORTS,* October 1996, vol. 22 (10), 864-868